# EUROPEAN PATENT SPECIFICATION

(11) **EP 3 797 332 B1**
(45) Date of publication and mention of the grant of the patent: **21.05.2025**
(21) Application number: 18738250.2
(22) Date of filing: 29.06.2018
(51) Int. Cl.: G02B 30/52, G02B 27/01, H04N 13/395

(54) **DEVICE AND METHOD FOR DISPLAYING A 3D IMAGE**
VORRICHTUNG UND VERFAHREN ZUR ANZEIGE VON 3D-BILDERN
DISPOSITIF ET PROCÉDÉ SERVANT À AFFICHER UNE IMAGE TRIDIMENSIONNELLE

(43) Date of publication of application: 31.03.2021
(73) Proprietor: HUAWEI TECHNOLOGIES CO., LTD., Shenzhen, Guangdong 518129 (CN)
(72) Inventor: SETIAWAN, Panji, 80992 Munich (DE); LIN, Tao, 80992 Munich (DE)
(74) Representative: Roth, Sebastian
(86) International application number: PCT/EP2018/067708
(87) International publication number: WO 2020/001792

(56) References cited:
- CN-A- 101 770 738
- US-A- 5 113 272
- US-A1- 2002 130 820
- US-A1- 2011 116 049
- US-A1- 2015 222 884
- US-A1- 2017 287 225
- US-A1- 2018 158 385
- US-B1- 9 866 822

## Description

### TECHNICAL FIELD

The invention relates to the technical field of Multifocal Plane Display (MFD) devices, and thus presents a device and method for displaying a three-dimensional (3D) image. In particular, the device and method of the invention are configured to display the 3D image based on a two-dimensional (2D) image and a depth map. A plurality of light beams are generated based on the 2D image, and selective diffusing of the light beams creates the 3D image.

### BACKGROUND

MFD devices can be employed in, for instance, Near Eye Display (NED), Near-To-Eye (NTE) or Head Mounted Display (HMD) applications or devices, and aim to achieve multifocal display of 3D images. Different MFD devices can be categorized into spatially multiplexed or temporally/time multiplexed implementations. In the time multiplexed implementations, the viewing distance (depth) of a displayed (single) 2D image from the eye is rapidly switched in synchronization with the rendering of frames of multiple focal planes, in order to create a flicker-free perception of a 3D image.

A major challenge of such MFD devices are the system requirements. In fact, the visibility of such a MFD device to be commercially deployed in the market depends largely on the computational load, hardware design, etc.

Numerous attempts have been made to address this challenge of the system requirements. For instance, some attempts proposed displaying a 3D image by having switchable layers, wherein each layer is aimed at displaying an image at a certain focal plane. These switchable layers are, for example, referred to as stacked switchable diffusers or liquid crystal diaphragms.

However, all attempts do not satisfyingly achieve a high precision rendering of the 3D image without requiring a high frame rate.

CN 101770738 A discloses 3D (three-dimensional) display equipment and a display method. The display equipment comprises a display part and a controller, wherein the display part comprises a plurality of layers of light emitting parts stacked along a watching direction, and each layer of light emitting parts comprise a plurality of light emitting units.

US 9866822 B1 discloses three-dimensional (3D) displays and methods for controlling the displays. A display may include an n-layered 3D column, wherein each i-th layer of the n-layered 3D column includes a group of at least one illuminable element uniquely positioned within the n-layered 3D column.

US 2011116049 A1 discloses systems and methods for displaying three-dimensional (3D) images. In particular, the systems can include a display block made from a transparent material with optical elements three-dimensionally disposed therein. Each optical element becomes luminous when illuminated by a light ray.

US 2015222884 A1 discloses configurations for presenting virtual reality and augmented reality experiences to users. The system may comprise a variable focus element (VFE) for focusing one or more frames of image data on an intermediate image plane, wherein the intermediate image plane is aligned to one of a plurality of switchable screens.

US 2017287225 A1 discloses a wearable system comprising a display system configured to present virtual content in a three-dimensional space.

US 2002130820 A1 discloses a multi-planar volumetric display system configured to generate volumetric three-dimensional images using a multi-surface optical device including a plurality of individual optical elements arranged in an array; and an image projector for selectively projecting images on respective optical elements to generate a first volumetric three-dimensional image viewable in the multi-surface optical device.

US 5113272 A discloses a display comprising a plurality of stacked layers of a display material containing a plurality of pixels which are each independently switchable from a first visual state to a second visual state.

### SUMMARY

In view of the above-mentioned challenge, the invention aims to improve devices and methods for displaying 3D images. The invention has the object to provide a device for displaying a 3D image with lower system requirements. In particular, the invention aims for a device and method to render a 3D image with high precision without requiring a high frame rate.

The object of the invention is achieved by the solution provided in the enclosed independent claims. Advantageous implementations of the invention are further defined in the dependent claims. In the following, parts of the description and drawings referring to embodiments not covered by the claims, are not part of the invention, but are illustrative examples necessary for understanding the invention.

In particular the invention proposes introducing a diffuser including a set of switchable diffuser elements for diffusing light beams to generate the 3D image. The depth can be changed in the diffuser by individually switching on/off selected diffuser elements.

A first aspect of the invention provides a device for displaying a 3D image, the device comprising a light source configured to emit light beams, each light beam corresponding to a pixel of a 2D image, and a diffuser configured to diffuse the light beams, wherein the diffuser includes a plurality of diffuser elements distributed across a three-dimensional volume, and each diffuser element is individually controllable to be transmissive or diffusive, and a controller configured to decompose the 3D image into the 2D image and a depth map, control the light source based on the 2D image, and control each diffuser element to be transmissive or diffusive based on the depth map.

By individually controlling the different diffuser elements, the system requirements are relaxed compared to other devices for displaying 3D images. In particular, the individually controlling enables rendering the 3D image with high precision without requiring a high frame rate, i.e. particularly a lower frame rate than used in other time-multiplexed MFD devices. Key for achieving this is that the 3D image can be represented as a 2D image and a depth map. Hence, the set of switchable diffuser elements can be used to generate the 3D image based on the depth map.

The diffuser of the device may be constructed based on liquid crystals (as diffuser elements), which can be electronically controlled by applying electricity to them. As in the LCD context, the liquid crystals may be used to individually switch the pixels on and off.

**In** an implementation form of the first aspect, the diffuser elements are arranged in a plurality of layers.

The diffuser thus comprises a plurality of diffuser layers at different depths with respect to a viewer or with respect to an exit pupil of the device. Thus, the 3D image can be created with high precision by diffusing the light beams with layers selected according to the depth map.

**In** a further implementation form of the first aspect, the diffuser elements are arranged in columns, each column comprising diffuser elements located in different layers.

The diffuser elements are thus arranged in a particularly simple geometrical structure, which allows to control the diffuser elements of one column independently of the diffuser elements of any other column. Diffuser elements in the same column but in different layers correspond to different 3D image depths.

**In** a further implementation form of the first aspect, the controller is configured to select, for each column, one layer based on the depth map and to control the one diffuser element of the column which is located in the selected layer to be diffusive and to control the one or more diffuser elements of the column which are located in the one or more non-selected layers to be transmissive.

Thus, based on the depth map, a certain depth can be selected per column, in order to generate in sum the 3D image with a high precision.

In a further implementation form of the first aspect, the diffuser elements in each layer adjoin each other.

In other words, there are no gaps between the diffuser segments in any of the layers. Each layer can thus provide a coherent image, in the sense that there will be no noticeable gaps between any image segments provided by neighboring diffuser elements of the layer.

In a further implementation form of the first aspect, the layers are spaced apart from each other.

Thus, a great depth range can be achieved using a small number of layers (e.g., less than five layers).

In a further implementation form of the first aspect, there is one column per pixel, or there is one column per group of pixels, each group comprising several pixels.

In a further limitation form of the first aspect, each layer is associated with a different depth in the 3D image.

In further implementation form of the first aspect, the depth map includes information about a depth of each pixel of the 3D image.

Thus, the device can efficiently render a high-precision 3D image.

In a further implementation form of the first aspect, the depth map has a lower resolution than the 2D image.

Thus, the processing requirements in the device are reasonably low, while still achieving precisely rendered 3D images.

The device may receive one or more 3D images to be displayed, e.g., in a video stream, and the controller takes each 3D image and controls its display.

In a further implementation form of the first aspect, the controller is further configured to extract the 3D image from a video signal or stream containing a sequence of 3D images, which is received by the device.

In a further implementation of the first aspect, the controller is further configured to estimate a number of depths in the 3D image, and to obtain the depth map based on this depth estimate.

Thus, a particularly efficient and high precision rendering of the 3D image is achieved.

In a further implementation of the first aspect, the controller is further configured to calculate a predicted depth map for a next 3D image based on the depth map, and to obtain a depth estimate of the next 3D image based on the predicted depth map.

Accordingly, the device can operate with higher efficiency and less computational load.

In a further implementation form of the first aspect, the device further comprises a magnifier arranged on an exit side of the diffuser.

A user of the device can thus be provided with an enlarged view of the 3D image that is generated in the diffuser. The magnifier may be a magnifying lens, for example.

In further implementation form of the first aspect, the magnifier has a focal plane and the diffuser comprises a plurality of diffuser layers, the diffuser layers including: a first diffuser layer located in the focal plane or located between the focal plane and the magnifier, and one or more further diffuser layers located between the first diffuser layer and the magnifier.

Image regions with infinite depth, i.e. image regions associated with far-away objects or scenery, can be displayed on the first diffuser layer. The first diffuser layer being located in the focal plane of the magnifier has the advantage that a user can view the first diffuser layer without accommodating her or his eye - the first diffuser layer will appear to be at an infinite distance from the user. The one or more further diffuser layers will appear closer to the user.

A second aspect of the invention provides a method for displaying a three-dimensional (3D) image, the method comprising decomposing the 3D image into a two-dimensional, 2D, image and a depth map, emitting light beams, each light beam corresponding to a pixel of the 2D image, diffusing the light beams by individually controlling each of a plurality of diffusing elements distributed across a three-dimensional volume to be transmissive or diffusive based on the depth map.

In an implementation form of the second aspect, the diffuser elements are arranged in a plurality of layers.

In a further implementation form of the second aspect, the diffuser elements are arranged in columns, each column comprising diffuser elements located in different layers.

In a further implementation form of the second aspect, the method comprises selecting, for each column, one layer based on the depth map and controlling the one diffuser element of the column which is located in the selected layer to be diffusive and controlling the one or more diffuser elements of the column which are located in the one or more non-selected layers to be transmissive.

In a further implementation form of the second aspect, the diffuser elements in each layer adjoin each other.

In a further implementation form of the second aspect, the layers are spaced apart from each other.

In a further implementation form of the second aspect, there is one column per pixel, or there is one column per group of pixels, each group comprising several pixels.

In a further limitation form of the second aspect, each layer is associated with a different depth in the 3D image.

In further implementation form of the second aspect, the depth map includes information about a depth of each pixel of the 3D image.

In a further implementation form of the second aspect, the depth map has a lower resolution than the 2D image.

**In** a further implementation form of the second aspect, the method further comprises extracting the 3D image from a received video signal or stream containing a sequence of 3D images.

**In** a further implementation of the second aspect, the method further comprises estimating a number of depths in the 3D image, and obtaining the depth map based on this depth estimate.

In a further implementation of the second aspect, the method further comprises calculating a predicted depth map for a next 3D image based on the depth map, and obtaining a depth estimate of the next 3D image based on the predicted depth map.

The method of the second aspect and its implementation forms achieve the advantages and effects described above for the device of the first aspect and its respective implementation forms.

A third aspect of the invention provides a computer program product comprising a program code for controlling a device according to the first aspect or any of its implementation forms or for performing, when the program code is executed on a computer, a method according to the second aspect or any of its implementation forms.

Accordingly, all the advantages and effects described above with respect to the device of the first aspect and the method of the second aspect, respectively, are achieved.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF THE DRAWINGS

The above described aspects and implementation forms of the invention will be explained in the following description of specific embodiments in relation to the enclosed drawings, in which
- FIG. 1: shows a device according to an embodiment of the invention.
- FIG. 2: illustrates schematically how a device according to an embodiment of the invention creates a 3D image.
- FIG. 3: shows a method according to an embodiment of the invention.
- FIG. 4: shows an algorithm carried out by a device according to an embodiment of the invention.

### DETAILED DESCRIPTION OF THE EMBODIMENTS

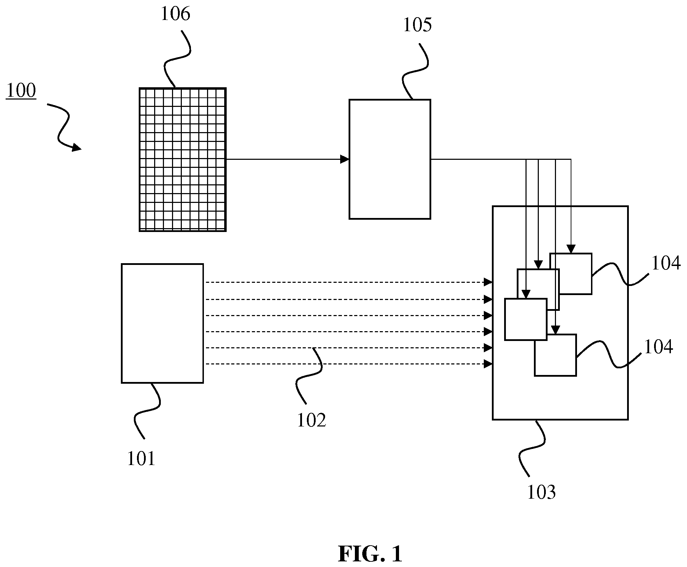

FIG. 1 shows a device 100 according to an embodiment of the invention. The device 100 is particularly configured to display a 3D image. The 3D image to be displayed may be received by the device 100, e.g., by an input video steam. Generally, any 3D image to be displayed may be rendered by the device 100 based on a 2D image and a depth map 106. These may be generated by the device 100 from the 3D image to be displayed, as explained later.

The device 100 comprises a light source 101, a diffuser 103, and a controller 105. The light source 101 is configured to emit light beams 102. Each light beam 102 thereby corresponds to a pixel of a 2D image. The diffuser 103 is further configured to diffuse the light beams emitted from the light source 101. In particular, the diffuser 103 to this end includes a plurality of diffuser elements 104, which are distributed across a 3D volume. In FIG. 1 for illustrational purposes only, four diffuser elements 104 are shown. Each diffuser element 104 of the diffuser 103 is individually controllable to be transmissive or diffusive, particularly by means of the controller 105 as indicated by the respective arrows in FIG. 1 That is, the controller 105 is configured to control each diffuser element 104 to be transmissive or diffusive based on the depth map 106. This results in the creation of the 3D image.

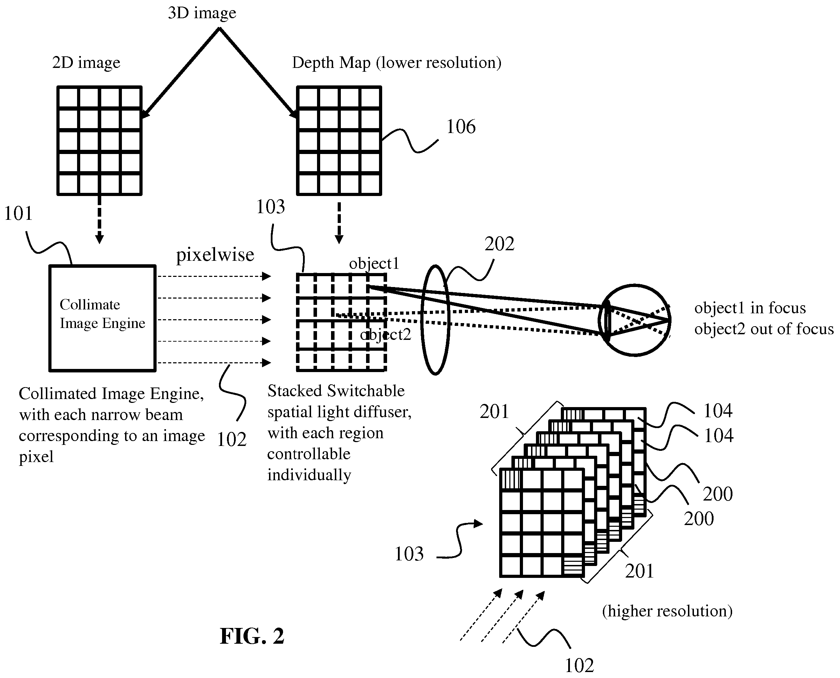

FIG. 2 illustrates schematically how a device 100 according to an embodiment of the invention generates the 3D image. FIG. 2 thereby bases on the device 100 shown in FIG. 1, i.e. same elements are labelled with the same reference signs and function likewise. In particular, FIG. 2 shows that the 3D image to be displayed can be represented by a 2D image and a depth map 106. Thus, the diffuser 103 with its individually controllable diffuser elements 104 can be controlled to generate the 3D image based on the 2D image and the depth map 106. Notably, the higher the number of diffuser elements 104 being employed, the higher the depth of the 3D image that can be rendered by the device 100. The depth map 106 usually has a lower resolution than the 2D image.

As is shown in FIG. 2, a collimated image engine may be used as the light source 101. It takes the 2D image as an input, and is accordingly configured to output a set of narrow light beams 102, wherein each light beam 102 corresponds to an image pixel of the 2D image. The diffuser 103 takes these narrow light beams 102, i.e. the light beams 102 impinge on the diffuser 103 which is configured to diffuse them based on the depth map 106, i.e. as shown in FIG. 1 by the controller 105 receiving the depth map 106 as an input.

In particular, the diffuser 103 includes the plurality of individually controllable diffuser elements 104, which are distributed across a 3D volume. As shown in FIG. 2, the diffuser elements 104 are arranged in a plurality of layers, wherein each layer 200 may be associated with a different depth in the 3D image. The shown layers 200 are particularly arranged one after the other in direction of the light beams 102 and are spaced apart from each other. Preferably, the diffuser elements 104 in each layer 200 adjoin each other.

As further shown in FIG. 2, the diffuser elements 104 are also arranged in columns 201 two different columns are indicated in FIG. 2 by different hatchings), wherein each column 201 comprises diffuser elements 104 located in different layers 200. There may be one column 201 per pixel of the 2D image, or one column 201 per group of pixels of the 2D image, each group comprising several pixels. That is, each column 201 may be associated with one or more narrow light beams 102. For each narrow light beam 102 a certain diffuser element 104 may be switched on. When a diffuser element 104 is switched on, it will diffuse the incoming narrow light beam 102 before it is projected directly to the eye (pupil). Specifically, to generate the 3D image, the controller 105 may particularly be configured to select, for each column 201, one layer 200 based on the depth map 106 and to control the one diffuser element 104 of the column 201 which is located in the selected layer 200 to be diffusive and to control the one or more diffuser elements 104 of the column 201 which are located in the one or more non-selected layers 200 to be transmissive. The selected diffuser elements 104 of the diffuser 103 may correspond to an estimated depth of the pixels. As also illustrated in FIG. 2, when the eye is focusing on an object 1 in the image, an object 2 is naturally out of focus.

FIG. 2 also shows that a magnifier 202, e.g., a lens, can be arranged on an exit side of the diffuser 103. The magnifier 202 allows a user to view an enlarged 3D image.

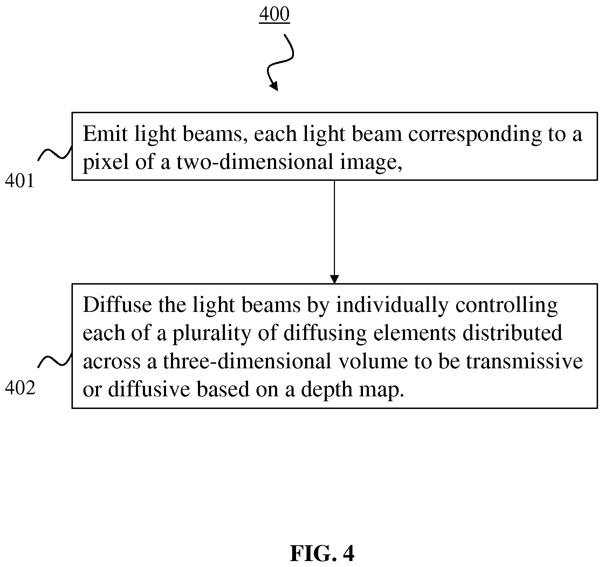

The controller 105 of the device 100 is configured to decompose the 3D image to be displayed (e.g., as received) into the 2D image and the depth map 106. Then, the controller 105 can control the light source 101 based on the 2D image, and can control the diffuser 103 based on the depth map 106. The controller 105 may also be configured to calculate a predicted depth map for a next 3D image based on the depth map 106, and to obtain a depth estimate of the next 3D image based on the predicted depth map. An example implementation thereof is shown in FIG. 4.

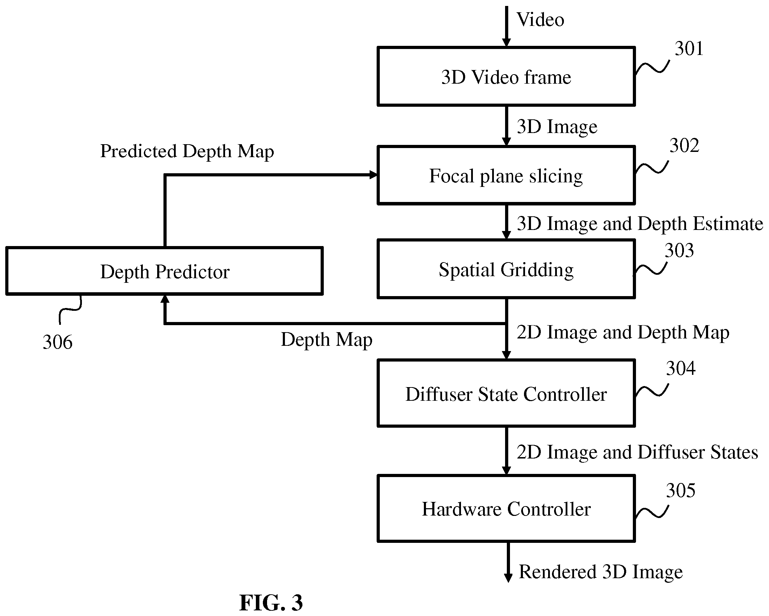

FIG. 3 shows particularly a block diagram for processing an incoming video stream containing a sequence of 3D images to be displayed. The processing shown in FIG. 3 may be carried out by the controller 105 (which receives the video stream). The video stream may accordingly be fed into the device 100 of FIG. 1.

A block 301 "3D Video Frame" extracts a 3D Image from the video stream and feeds it to the block 302 "Focal Plane Slicing". Block 302 estimates the depth of the current image (or the number of focal planes (depths) present in the current 3D image). The 3D image and the depth estimate are forwarded to block 303 "Spatial Gridding", which decomposes the 3D image into a 2D image and a depth map 106. The next block 304 "Diffuser State Controller" takes the depth map 106 to select the diffusing layer state to be assigned to each pixel, and it forwards the 2D image data. Finally, both the 2D image and a set of diffusing layer states are used by block 305 "Hardware Controller", which may be implemented by the controller 105, in order to render the 3D image. For the next frame, a "Depth Predictor" may be applied in block 306, in order to predict the depth distribution of the next 3D image. The different blocks may represent different functional steps, which the controller 105 is able to implement.

FIG. 4 shows a method 400 according to an embodiment of the invention. The method 400 may be performed by a device for displaying a 3D image, particularly by the device 100 shown in FIG. 1 (and schematically explained in FIG. 2). The method 400 is usable for displaying a 3D image. The method 400 comprises a step 401 of emitting light beams 102, each light beam 102 corresponding to a pixel of a 2D image. Further, the method 400 comprises a step 402 of diffusing the light beams 102 by individually controlling each of a plurality of diffusing elements 104 distributed across a 3D volume to be transmissive or diffusive based on a depth map 106.

The invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality.

## Claims

1. Device (100) for displaying a three-dimensional (3D) image, the device (100) comprising
a light source (101) configured to emit light beams (102), each light beam (102) corresponding to a pixel of a two-dimensional (2D) image, and
a diffuser (103) configured to diffuse the light beams (102),
wherein the diffuser (103) includes a plurality of diffuser elements (104) distributed across a three-dimensional volume, and each diffuser element (104) is individually controllable to be transmissive or diffusive, and
a controller (105) configured to:
decompose (303) the 3D image into the 2D image and a depth map (106),
control the light source (101) based on the 2D image,
control each diffuser element (104) to be transmissive or diffusive based on the depth map (106).

2. Device (100) according to claim 1, wherein the diffuser elements (104) are arranged in a plurality of layers (200).

3. Device (100) according to claim 2, wherein the diffuser elements (104) are arranged in columns (201), each column (201) comprising diffuser elements (104) located in different layers (200).

4. Device (100) according to claim 3, wherein the controller (105) is configured to select, for each column (201), one layer (200) based on the depth map (106) and to control the one diffuser element (104) of the column (201) which is located in the selected layer (200) to be diffusive and to control the one or more diffuser elements (104) of the column (201) which are located in the one or more non-selected layers (200) to be transmissive.

5. Device (100) according to any one of claims 2 to 4, wherein the diffuser elements (104) in each layer (200) adjoin each other.

6. Device (100) according to any one of claims 2 to 5, wherein the layers (200) are spaced apart from each other.

7. Device (100) according to any one of claims 3 to 6, wherein
there is one column (201) per pixel,
or wherein there is one column (201) per group of pixels, each group comprising several pixels.

8. Device (100) according to any one of claims 2 to 7, wherein
each layer (200) is associated with a different depth in the 3D image.

9. Device (100) according to any one of claims 1 to 8, wherein
the depth map (106) has a lower resolution than the 2D image.

10. Device (100) according to any one of claims 1 to 9, wherein
the controller (105) is further configured to calculate (306) a predicted depth map for a next 3D image based on the depth map (106), and to obtain (302) a depth estimate of the next 3D image based on the predicted depth map.

11. Device (100) according to any one of claims 1 to 10, further comprising a magnifier (202) arranged on an exit side of the diffuser (103).

12. Device (100) according to claim 11, wherein the magnifier (200) has a focal plane and the diffuser (103) comprises a plurality of diffuser layers, the diffuser layers including:
a first diffuser layer located in the focal plane or located between the focal plane and the magnifier (200), and
one or more further diffuser layers located between the first diffuser layer and the magnifier (200).

13. Method (400) for displaying a three-dimensional (3D) image, the method (400) comprising
decomposing the 3D image into a two-dimensional, 2D, image and a depth map (106),
emitting (401) light beams (102), each light beam (102) corresponding to a pixel of the 2D image,
diffusing (402) the light beams (102) by individually controlling each of a plurality of diffusing elements (104) distributed across a three-dimensional volume to be transmissive or diffusive based on the depth map (106).

14. Computer program product comprising a program code for controlling a device (100) according to one of claims 1 to 12 or for performing, when the program code is executed on a computer, a method (400) according to claim 13.

## Patentansprüche

1. Vorrichtung (100) zum Anzeigen von dreidimensionalen (three-dimensional, 3D) Bildern, wobei die Vorrichtung (100) Folgendes umfasst:
eine Lichtquelle (101), die dazu konfiguriert ist, Lichtstrahlen (102) zu emittieren, wobei jeder Lichtstrahl (102) einem Pixel von zweidimensionalen (2D) Bildern entspricht, und
einen Streuer (103), der dazu konfiguriert ist, die Lichtstrahlen (102) zu streuen,
wobei der Streuer (103) eine Vielzahl von Streuelementen (104) beinhaltet, die über ein dreidimensionales Volumen verteilt ist, und jedes Streuelement (104) individuell steuerbar ist, um durchlässig oder streuend zu sein, und
eine Steuerung (105), die zu Folgendem konfiguriert ist:
Zerlegen (303) von 3D-Bildern in 2D-Bilder und eine Tiefenkarte (106),
Steuern der Lichtquelle (101) basierend auf den 2D-Bildern,
Steuern jedes Streuelements (104) dazu, basierend auf der Tiefenkarte (106) durchlässig oder streuend zu sein.

2. Vorrichtung (100) gemäß Anspruch 1, wobei die Streuelemente (104) in einer Vielzahl von Schichten (200) angeordnet sind.

3. Vorrichtung (100) gemäß Anspruch 2, wobei die Streuelemente (104) in Spalten (201) angeordnet sind, wobei jede Spalte (201) Streuelemente (104) umfasst, die sich in verschiedenen Schichten (200) befinden.

4. Vorrichtung (100) gemäß Anspruch 3, wobei die Steuerung (105) dazu konfiguriert ist, für jede Spalte (201) eine Schicht (200) basierend auf der Tiefenkarte (106) auszuwählen und das eine Streuelement (104) der Spalte (201), das sich in der ausgewählten Schicht (200) befindet, derart zu steuern, um streuend zu sein, und das eine oder die mehreren Streuelemente (104) der Spalte (201), die sich in der einen oder den mehreren nicht ausgewählten Schichten (200) befinden, derart zu steuern, um durchlässig zu sein.

5. Vorrichtung (100) gemäß einem der Ansprüche 2 bis 4, wobei die Streuelemente (104) in jeder Schicht (200) aneinander angrenzen.

6. Vorrichtung (100) gemäß einem der Ansprüche 2 bis 5, wobei die Schichten (200) voneinander beabstandet sind.

7. Vorrichtung (100) gemäß einem der Ansprüche 3 bis 6, wobei eine Spalte (201) pro Pixel vorliegt,
oder wobei eine Spalte (201) pro Pixelgruppe vorliegt, wobei jede Gruppe mehrere Pixel umfasst.

8. Vorrichtung (100) gemäß einem der Ansprüche 2 bis 7, wobei jede Schicht (200) mit einer verschiedenen Tiefenkarte in den 3D-Bildern verknüpft ist.

9. Vorrichtung (100) gemäß einem der Ansprüche 1 bis 8, wobei die Tiefenkarte (106) eine niedrigere Auflösung als die 2D-Bilder aufweist.

10. Vorrichtung (100) gemäß einem der Ansprüche 1 bis 9, wobei die Steuerung (105) ferner dazu konfiguriert ist, eine vorhergesagte Tiefenkarte für nächste 3D-Bilder basierend auf der Tiefenkarte (106) zu berechnen (306) und eine Tiefenschätzung der nächsten 3D-Bilder basierend auf der vorhergesagten Tiefenkarte zu erlangen (302).

11. Vorrichtung (100) gemäß einem der Ansprüche 1 bis 10, ferner umfassend eine Lupe (202), die an einer Ausgangsseite des Streuers (103) angeordnet ist.

12. Vorrichtung (100) gemäß Anspruch 11, wobei die Lupe (200) eine Brennebene aufweist und der Streuer (103) eine Vielzahl von Streuschichten umfasst, wobei die Streuschichten Folgendes beinhalten:
eine erste Streuschicht, die sich in der Brennebene befindet oder sich zwischen der Brennebene und der Lupe (200) befindet, und
eine oder mehrere weitere Streuschichten, die sich zwischen der ersten Streuschicht und der Lupe (200) befinden.

13. Verfahren (400) zum Anzeigen von dreidimensionalen (3D) Bildern, wobei das Verfahren (400) Folgendes umfasst
Zerlegen von 3D-Bildern in zweidimensionale, 2D, Bilder und eine Tiefenkarte (106),
Emittieren (401) von Lichtstrahlen (102), wobei jeder Lichtstrahl (102) einem Pixel von 2D-Bildern entspricht,
Streuen (402) der Lichtstrahlen (102) durch individuelles Steuern jedes einer Vielzahl von Streuelementen (104), die über ein dreidimensionales Volumen verteilt ist, um durchlässig oder streuend zu sein, basierend auf der Tiefenkarte (106).

14. Computerprogrammprodukt, umfassend einen Programmcode zum Steuern einer Vorrichtung (100) gemäß einem der Ansprüche 1 bis 12 oder zum Durchführen eines Verfahrens (400) gemäß Anspruch 13, wenn der Programmcode auf einem Computer ausgeführt wird.

## Revendications

1. Dispositif (100) servant à afficher une image tridimensionnelle (3D), le dispositif (100) comprenant
une source de lumière (101) configurée pour émettre des faisceaux de lumière (102), chaque faisceau de lumière (102) correspondant à un pixel d'une image bidimensionnelle (2D), et un diffuseur (103) configuré pour diffuser les faisceaux de lumière (102),
dans lequel le diffuseur (103) comporte une pluralité d'éléments diffuseurs (104) répartis sur un volume tridimensionnel, et chaque élément diffuseur (104) peut être commandé individuellement pour être transmissif ou diffusif, et
un dispositif de commande (105) configuré pour :
décomposer (303) l'image 3D en l'image 2D et une carte de profondeur (106),
commander la source de lumière (101) sur la base de l'image 2D, commander chaque élément diffuseur (104) pour qu'il soit transmissif ou diffusif sur la base de la carte de profondeur (106).

2. Dispositif (100) selon la revendication 1, dans lequel les éléments diffuseurs (104) sont disposés en une pluralité de couches (200).

3. Dispositif (100) selon la revendication 2, dans lequel les éléments diffuseurs (104) sont disposés en colonnes (201), chaque colonne (201) comprenant des éléments diffuseurs (104) situés dans des couches (200) différentes.

4. Dispositif (100) selon la revendication 3, dans lequel le dispositif de commande (105) est configuré pour sélectionner, pour chaque colonne (201), une couche (200) sur la base de la carte de profondeur (106) et pour commander l'élément diffuseur (104) de la colonne (201) qui est situé dans la couche sélectionnée (200) pour être diffusif et pour commander les un ou plusieurs éléments diffuseurs (104) de la colonne (201) qui sont situés dans les une ou plusieurs couches non sélectionnées (200) pour être transmissifs.

5. Dispositif (100) selon l'une quelconque des revendications 2 à 4, dans lequel les éléments diffuseurs (104) de chaque couche (200) sont contigus les uns aux autres.

6. Dispositif (100) selon l'une quelconque des revendications 2 à 5, dans lequel les couches (200) sont espacées les unes des autres.

7. Dispositif (100) selon l'une quelconque des revendications 3 à 6, dans lequel
il existe une colonne (201) par pixel,
ou dans lequel il existe une colonne (201) par groupe de pixels, chaque groupe comprenant plusieurs pixels.

8. Dispositif (100) selon l'une quelconque des revendications 2 à 7, dans lequel
chaque couche (200) est associée à une profondeur différente dans l'image 3D.

9. Dispositif (100) selon l'une quelconque des revendications 1 à 8, dans lequel
la carte de profondeur (106) présente une résolution inférieure à celle de l'image 2D.

10. Dispositif (100) selon l'une quelconque des revendications 1 à 9, dans lequel
le dispositif de commande (105) est également configuré pour calculer (306) une carte de profondeur prédite pour une image 3D suivante sur la base de la carte de profondeur (106), et pour obtenir (302) une estimation de profondeur de l'image 3D suivante sur la base de la carte de profondeur prédite.

11. Dispositif (100) selon l'une quelconque des revendications 1 à 10, comprenant également une loupe (202) disposée sur un côté sortie du diffuseur (103).

12. Dispositif (100) selon la revendication 11, dans lequel la loupe (200) présente un plan focal et le diffuseur (103) comprend une pluralité de couches de diffusion, les couches de diffusion comportant :
une première couche de diffusion située dans le plan focal ou située entre le plan focal et la loupe (200), et
une ou plusieurs couches de diffusion supplémentaires situées entre la première couche de diffusion et la loupe (200).

13. Procédé (400) servant à afficher une image tridimensionnelle (3D), le procédé (400) comprenant
la décomposition de l'image 3D en une image bidimensionnelle, 2D, et d'une carte de profondeur (106),
l'émission (401) de faisceaux de lumière (102), chaque faisceau de lumière (102) correspondant à un pixel de l'image 2D,
la diffusion (402) des faisceaux de lumière (102) en commandant individuellement chacun d'une pluralité d'éléments diffuseurs (104) répartis sur un volume tridimensionnel pour être transmissifs ou diffusifs sur la base de la carte de profondeur (106).

14. Produit programme informatique comprenant un code programme pour commander un dispositif (100) selon l'une des revendications 1 à 12 ou pour mettre en œuvre, lorsque le code programme est exécuté sur un ordinateur, un procédé (400) selon la revendication 13.
